# NEW EUROPEAN PATENT SPECIFICATION

(11) **EP 0 721 732 B2**
(45) Date of publication and mention of the opposition decision: **10.11.2010**
(45) Mention of the grant of the patent: 29.09.1999
(21) Application number: 95203036.9
(22) Date of filing: 08.11.1995
(51) Int. Cl.: A01K 5/00, A01K 5/02

(54) **A construction for displacing feed for animals**
Aufbau für das Fördern von Tierfutter
Structure pour déplacer l'alimentation animale

(30) Priority: 11.01.1995 NL 9500051
(43) Date of publication of application: 17.07.1996
(73) Proprietor: MAASLAND N.V., 3155 PD Maasland (NL)
(72) Inventor: van der Lely, Cornelis, CH-6300 Zug (CH)
(74) Representative: Corten, Maurice Jean F.M.

(56) References cited:
- EP-A2- 0 328 796
- EP-A2- 0 334 366
- WO-A-96/14735
- WO-A1-88/09119
- WO-A1-92/08344
- DE-A1- 3 326 484
- DE-B- 1 216 005
- FR-A1- 2 394 480
- GB-A- 1 556 431
- US-A- 3 550 812
- US-A- 5 069 165
- US-A- 5 255 195
- IPEMA: 'Volledig automatisch voeren van opfokstieren' LANDBOUWMECHANISATIE vol. 37, no. 2, WAGENINGEN (NL), pages 164 - 165, XP008080749
- The Storti International brochure, Edition March 1993
- The Handbook of the Alfa Laval Diet Feeders "Jollyfeed 8-11", Edition December 1989
- The Handbook of the Storti International "Carro miscelatore distributore Bull Dog", Edition January 1995

## Description

The present invention relates to a construction for automatically displacing feed for animals to said animals by means of a displaceable implement, which implement includes automatically operating control means and at least one motor and a storage box for the feed.

Such a construction is known from US-A-5 069 165. In this document there is described and drawn a live-stock feeder system comprising an overhead guide track and a feed container suspended from the guide track. The system for feeding live-stock is conceived to automatically produce and dispense rations to animals in their stalls.

When the feed container is empty it can be replenished at a station which extends along the guide track. The station is provided with a silo having a discharge screw.

The above-mentioned construction has the disadvantage that the feed container can only be replenished by means of said station. It is thus not possible to replenish the feed container with material from a clamp silo.

It is an object of the invention to make the above-mentioned construction suitable for automatically picking up feed from different silos, transporting and mixing the feed automatically, and discharging it automatically to the relevant animal.

According to the invention this is achieved by the features of the characterizing part of claim 1.

According to a particular aspect of the invention, the construction comprises means for automatically displacing feed, as well as cow identification means for the identification of a cow, thereby enabling the administration of a specific quantity and quality of feed dependent on the relative cow. Therefore, the invention also relates to a construction for displacing material in an accommodation for animals by means of an implement capable of being displaced, which construction includes means for automatically displacing feed, as well as cow identification means for the identification of a cow, thereby enabling the administration of a specific quantity and quality of feed dependent on the relative cow. Such a construction enables to meet the individual needs of the animals to be fed and contributes to their good appetite.

According to a still further aspect of the invention, the construction comprises an implement equipped for displacing soilage or bulkage for one cow or for a small number of cows. Therefore, the invention also relates to a construction for displacing material in the accomodation for animals by means of an implement capable of being displaced, the same being equipped for displacing silage for one cow or for a small number of cows. According to again an other aspect of the invention, the implement comprises means for mixing per cow at least two types of feed to be administered. Therefore, the invention also relates to a construction for displacing material in an accomodation for animals by means of an implement capable of being displaced automatically, which implement includes means for automatically mixing per cow at least two types of feed.

For a bettor understanding of the present invention and to show how the same may be carried into effect, reference will now be made, by way of example, to the accompanying drawings, in which:
Figure 1 shows, in a schematic plan view, an implement according to the invention;
Figure 2 shows, in a side view, an automatically operating displacing implement according to the invention;
Figure 3 is a plan view of Figure 2, and
Figure 4 shows, in a schematic plan view, a part of the implement, the displacing implement being connected to an electricity supply.

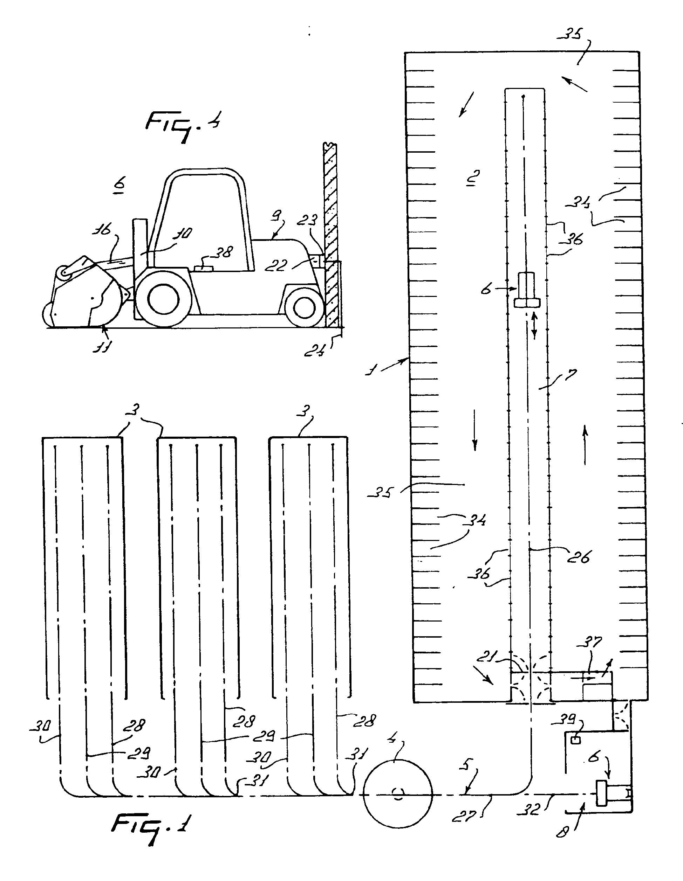

Figure 1 shows in a schematic plan view a construction including an accomodation for animals, such as dairy cows. The construction comprises a stable or cowshed 1 including an animal accomodation 2, a milking robot 37 and furthermore three slot silos 3 arranged parallel to the longitudinal direction of the cowshed 1, an upright concentrate silo 4, guide elements 5 in the form of electromagnetic cables fitted in a floor, an automatically operating implement designed as a feeding robot (6), and a maintenance building 8. The cowshed 1 comprises, in its centre, a feed alley 7 which extends in the longitudinal direction and ends at some distance from its rear wall, thereby providing a permanent rear cow passage extending transversely to the feed alley. In the feed alley 7 near the front of the cowshed 1, there is provided an automatically controlled fencing 21 which, in a first position, releases a cow passage extending transversely to the feed alley 7 and, in a second position, closes same off. The latter position releases a passage in the longitudinal direction of the feed alley, e.g. for the feeding robot 6. The cowshed 1 includes a walking part 35 and cubicles 34 for the animals. The walking part 35 is adjacent to the feed alley 7 by means of a fencing including feeding places 36, where the cows can take feed individually. The feeding places 36 may comprise cow identification means, such as transponders, which are connected with a central computer 39 for the accomodation and for the feeding robot 6.

In the longitudinal centre of the feed alley 7 there is provided a part 26 of the guide cable 5 extending to outside the cowshed 1. This part 26 passes by means of a bend into a guide part 27 extending transversely to the longitudinal direction of the cowshed 1 and leading under a concentrate silo 4 to three bulkage silos 3. Beyond the bulkage silo 4, the guide part 27 is provided near each soilage silo 3 with a number of switches 31, in the present embodiment three, which release one of a number of branches 28, 29, 30 of the guide element 5, which branches are arranged side by side in the longitudinal direction of the slot silos 3.

The guide element 5 furthermore comprises a guide part 32 which is in alignment with the part 27, but, relative to the concentrate silo 4, extends in the opposite direction and leads to inside the maintenance building 8. At the end of the guide part 32 inside the maintenance building 8 there is provided a contact element 23. The contact element 23 may be engaged to a contact element 22 on the feeding robot 6; it is connected to an electric power supply 24, in the present embodiment constituted by the electricity grid.

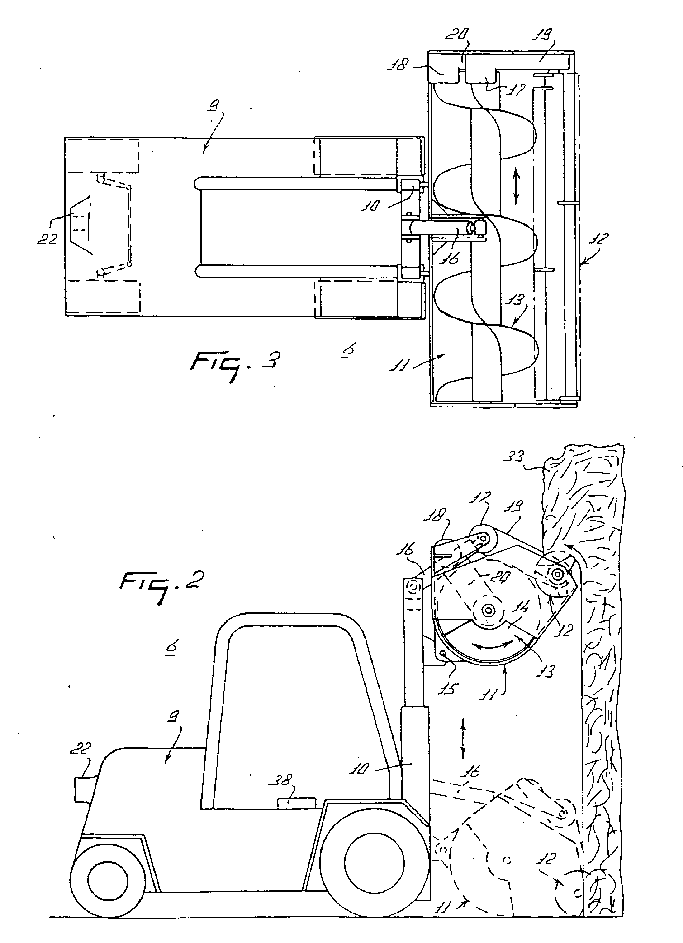

Figure 2 shows the feeding robot 6. In the present embodiment, the feeding robot 6 comprises a fork-lift truck 9 or at least the main parts thereof. This fork-lift truck comprises, for its drive, batteries and an electric motor and is adapted in such a way, inter alia by means of an onboard computer 38, that it is capable of automatically being controlled and automatically being moved in both directions along the guide cable 5. The feeding robot 6 comprises sensors for establishing the way covered and for detecting the sharp bends made, with the aid of the wheel revolutions. On the basis of the way covered and a starting point once inputted in the onboard computer 38, the feeding robot 6 constantly establishes its position inside the construction, i.e. the whole of the cowshed 1, the feed silos 3, 4 and a pertinent driving path including a guide cable 5. The bends, such as those provided between the parts 26 and 27 of the guide cable and at the switches 31, constitute the calibration points for the feeding robot 6 upon calculating the way covered.

The fork-lift truck 9 comprises a telescopic lever 10, to which a loading shovel including a storage box 11 is pivotably connected about a pivot shaft 15 being arranged transversely to the driving direction of the fork-lift truck 9. The connection with the lever 10 comprises an automatically operable adjusting element 16, which is capable of being adjusted in its longitudinal direction and is arranged at some distance from the pivot shaft 15. At the front side of the storage box 11, the loading shovel comprises a drivable loading member 12, here designed as a cutting member. The loading member 12 is driven by means of a motor 17 that is capable of being automatically controlled, i.e. by the onboard computer 38, and a transmission element 19, such as a chain. Inside the storage box 11, there is provided a mixing and discharging auger 13 which is capable of being driven by means of a motor 18 and a drive element 20. This auger is drivable in a way corresponding to that of the loading member. For the discharging of the feed, the storage box 11 includes on both sides an opening 14, through which the feed loaded therein is discharged by the rotation of the auger 13. In a non-shown embodiment, the storage box 11 comprises here an automatically controllable slide which is capable of releasing the outlet opening 14 for the passage of the feed. Both the loading member 12 and the mixing and discharging auger 13 are bearing-mounted in the longitudinal direction of the storage box 11, i.e. transversely to the driving direction of the fork-lift truck.

The operation of the machine will be further explained in what follows.

By way of example, eighty cows can be milked two to four times a day in the cowshed 1 of the implement by means of the milking robot 37. The feeding robot 6 feeds the animals a number of times a day, e.g. four times; the number of feedings may be more or less, and the feedings are preferably effected at fixed moments.

The feeding robot 6 drives backwards into the feed alley 7 and leaves it forwards, so that the fork-lift truck 9 moves to the silage 33 in the slot silo 3 with the storage box 11 situated at the front side. The cutting device 12 is put into operation as soon as the feeding robot 6 has ascertained that it has entered a bulkage silo 3, i.e. has passed a switch, and as soon as a sensor provided thereon for the purpose has ascertained that the loading member is in contact with the silage 33. When silage 33 is loaded into the storage box 11, the latter moves from the bottom to the top, substantially vertically, along the silage 33, while the cutting device 12 turns at its upper end towards the storage box 11. At the same time, insofar as necessary, the adjusting element 16 is automatically withdrawn, so that the storage box 11 turns over backwardly about the pivot shaft 15 and the silage can be loaded in an advantageous manner, while the fork-lift truck 9 automatically moves slightly into the direction of the soilage in the silo. After the loading of feed from the slot silo, the feeding robot 6 leaves same while passing under or along the concentrate silo 4, where concentrate or other feed is automatically loaded and mixed with the bulkage.

At regular intervals or, in the case that the feeding takes place at fixed moments, after the feeding, the feeding robot 6 interrupts its activities and moves, after having left the guide part 27, through a switch to the maintenance building 8 for a recharge of the batteries of the fork-lift truck 9. When moving along the guide part 32, the contact element 22 of the fork-lift truck 9 automatically comes into contact with the contact element 23 in the maintenance building 8, the feeding robot 6 is automatically stopped and the batteries are recharged. In a preferred embodiment, every evening after the last feeding run, the robot 6 goes to the maintenance building for an automatic recharge. In the morning, the robot 6 is automatically disconnected from the power point.

The feeding robot 6 handles in principle small portions of soilage or bulkage and concentrate, i.e. a sufficient quantity for one to three cows. However, larger portions, i.e. for five to ten cows, can be displaced as well. The feeding robot 6 is capable of unloading the feed in the feed alley 7 alternately at its left side and at its right side. By means of the cow identification means and the central computer 37, the feeding robot 6 can be directed to any feeding place 36 where a cow has reported for the dosage of feed according to quantity and composition dependent on the relative cow. The feeding robot 6 comprises sensors of an automatic weighing system controlled by the onboard computer 38 and provided in the connection of the storage box, thereby enabling the unloading of a specific quantity of feed. In an alternative embodiment, the onboard computer supplies a controlled signal for a specific number of revolutions of the auger 13, which also results in the dosage of a measured quantity of feed. When the feeding robot 6 leaves the guide cable 5 for some reason or other, it is immediately stopped due to the cutting off of the contact, which increases the security of the feeding system.

## Claims

1. A construction for automatically displacing feed in an accommodation for animals to said animals by means of a displaceable implement, which implement includes automatically operating control means and at least one motor and a storage box (11) for the feed, **characterized in that** the storage box (11) comprises an automatically controlled drivable loading member for loading feed from at least one silo into the storage box (11), the loading member comprising a cutting device (12), and a mixing and discharging auger (13) provided inside the storage box (11).

2. A construction as claimed in claim 1, **characterized in that** the mixing and discharging auger (13) is also suitable for discharging the loaded feed.

3. A construction as claimed in any one of claims 1 - 2, **characterized in that** the construction further comprises cow identification means for the identification of a cow, thereby enabling the administration of a specific quantity and quality of feed dependent on the relative cow.

4. A construction as claimed in one or more of the preceding claims, **characterized in that** the implement is equipped for automatically displacing silage for one cow or for at least a small number of cows.

5. A construction as claimed in one or more of the preceding claims, **characterized in that** the implement is suitable for automatically unloading material optionally on its left or its right relative to the driving direction.

6. A construction as claimed in one or more of the preceding claims, **characterized in that** the accommodation for the animals is a loose house.

7. A construction as claimed in one or more of the preceding claims, **characterized in that** the implement is a robot (6) capable of being displaced automatically.

8. A construction as claimed in any one of claims 6-7, **characterized in that** the construction comprises a guide means (5) extending both inside and outside the accommodation (1).

9. A construction as claimed in any one of claims 6-8, **characterized in that** the accommodation is constituted by a cowshed, and that there is provided a guide means (5) in the centre thereof.

10. A construction as claimed in any one of claims 8-9, **characterized in that** the guide means (5) is fitted in a floor.

11. A construction as claimed in any one of claims 8-10, **characterized in that** the guide means (5) extends to in the floor of a bulkage silo (3).

12. A construction as claimed in claim 11, **characterized in that** the silo (3) is a slot silo.

13. A construction as claimed in any one of claims 7-12, **characterized in that** the robot (6) is driven by batteries.

14. A construction as claimed in any one of claims 8-13, **characterized in that** the guide means (5) fitted in the soil serves for controlling the robot (6).

15. A construction as claimed in any one of claims 7-14, **characterized in that** the robot (6) is capable of being moved automatically to a connection (23) with an electric power supply (24) for recharging the batteries.

16. A construction as claimed in claim 15, **characterized in that** the power supply (24) is constituted by the electricity grid.

17. A construction as claimed in any one of claims 13-16, **characterized in that** the robot (6) is disconnected automatically after the batteries have been recharged.

18. A construction as claimed in any one of claims 15-17, **characterized in that** the electricity connection (23) is provided near the end of a guide cable (5).

19. A construction as claimed in one or more of the preceding claims, **characterized in that** the construction cooperates with a cow identification system.

20. A construction as claimed in one or more of the preceding claims, **characterized in that** the volume of the feeding is dependent on the relative cow.

21. A construction as claimed in any one of claims 7-20, **characterized in that** the robot (6) is suitable for automatically mixing two or more types of feed.

22. A construction as claimed in any one of claims 7-21, **characterized in that** the robot (6) is based on a fork-lift truck (9).

23. A construction as claimed in any one of claims 7-22, **characterized in that** the robot (6) comprises construction elements for the fork-lift truck (9), enabling its automatic control.

24. A construction as claimed in any one of claims 7-23, **characterized in that** the robot (6) is a feeding robot for loading and unloading feed.

25. A construction as claimed in any one of claims 22-24, **characterized in that** the storage box (11) is arranged so as to be hydraulically adjustable on the lever (10) of the fork-lift truck (9).

26. A construction as claimed in one or more of the preceding claims, **characterized in that** the mixing and discharging auger (13) is a screw conveyor (13) capable of discharging feed optionally to the left or to the right relative to the driving direction.

27. A construction as claimed in any one of claims 22-26, **characterized in that** the lever (10) provided on the fork-lift truck (9) supports the storage box (11).

28. A construction as claimed in any one of claims 7-27, **characterized in that** the construction comprises a contact element (22, 23) for connecting the robot to the electricity grid.

29. A construction as claimed in any one of claims 6-28, **characterized in that** the accommodation (1) comprises a milking robot (37).

## Patentansprüche

1. Anlage zum automatischen Befördern von Futter in einer Unterkunft für Tiere zu den Tieren mit Hilfe eines verfahrbaren Gerätes, das eine automatisch arbeitende Steuerung und mindestens einen Motor sowie einen Aufnahmebehälter (11) für das Futter aufweist,
**dadurch gekennzeichnet, daß** der Aufnahmebehälter (11) eine automatisch gesteuerte antreibbare Ladevorrichtung zum Laden von Futter aus mindestens einem Silo in den Aufnahmebehälter (11) umfaßt, wobei die Ladevorrichtung eine Schneidvorrichtung (12) und eine Misch- und Entladevorrichtung (13) umfaßt, die in dem Aufnahmebehälter (11) angeordnet ist.

2. Anlage nach Anspruch 1,
**dadurch gekennzeichnet, daß** die Misch- und Entladevorrichtung (13) auch zum Entladen des geladenen Futters geeignet ist.

3. Anlage nach einem der Ansprüche 1 bis 2,
**dadurch gekennzeichnet, daß** die Anlage ferner eine Kuhidentifikationsvorrichtung zur Identifikation einer Kuh umfaßt, so daß die Zuteilung einer bestimmten Menge und Art von Futter in Abhängigkeit von der jeweiligen Kuh ermöglicht ist.

4. Anlage nach einem oder mehreren der vorhergehenden Ansprüche,
**dadurch gekennzeichnet, daß** das Gerät zum automatischen Befördern von Silage für eine Kuh oder zumindest eine kleine Zahl von Kühen ausgebildet ist.

5. Anlage nach einem oder mehreren der vorhergehenden Ansprüche,
**dadurch gekennzeichnet, daß** das Gerät geeignet ist, Material wahlweise auf seiner linken oder seiner rechten Seite in bezug auf die Fahrtrichtung automatisch abzuladen.

6. Anlage nach einem oder mehreren der vorhergehenden Ansprüche,
**dadurch gekennzeichnet, daß** die Unterkunft für die Tiere ein Laufstall ist.

7. Anlage nach einem oder mehreren der vorhergehenden Ansprüche,
**dadurch gekennzeichnet, daß** das Gerät ein automatisch verfahrbarer Roboter (6) ist.

8. Anlage nach einem der Ansprüche 6 bis 7,
**dadurch gekennzeichnet, daß** die Anlage eine Leitvorrichtung (5) umfaßt, die sich sowohl innerhalb als auch außerhalb der Unterkunft (1) erstreckt.

9. Anlage nach einem der Ansprüche 6 bis 8,
**dadurch gekennzeichnet, daß** die Unterkunft durch einen Kuhstall gebildet ist, und daß in der Mitte desselben eine Leitvorrichtung (5) angeordnet ist.

10. Anlage nach einem der Ansprüche 8 bis 9,
**dadurch gekennzeichnet, daß** die Leitvorrichtung (5) in einem Boden angeordnet ist.

11. Anlage nach einem der Ansprüche 8 bis 10,
**dadurch gekennzeichnet, daß** sich die Leitvorrichtung (5) bis in den Boden eines Grünfuttersilos (3) erstreckt.

12. Anlage nach Anspruch 11,
**dadurch gekennzeichnet, daß** der Silo (3) ein Fahrsilo ist.

13. Anlage nach einem der Ansprüche 7 bis 12,
**dadurch gekennzeichnet, daß** der Roboter (6) akkubetrieben ist.

14. Anlage nach einem der Ansprüche 8 bis 13,
**dadurch gekennzeichnet, daß** die im Boden angeordnete Leitvorrichtung (5) zum Steuern des Roboters (6) dient.

15. Anlage nach einem der Ansprüche 7 bis 14,
**dadurch gekennzeichnet, daß** der Roboter (6) automatisch zu einer Anschlußstelle (23) mit einer Stromquelle (24) zum Wiederaufladen der Akkus zu verfahren ist.

16. Anlage nach Anspruch 15,
**dadurch gekennzeichnet, daß** die Stromquelle (24) durch das Stromversorgungsnetz gebildet ist.

17. Anlage nach einem der Ansprüche 13 bis 16,
**dadurch gekennzeichnet, daß** der Roboter (6) nach Wiederaufladen der Akkus automatisch entkoppelt wird.

18. Anlage nach einem der Ansprüche 15 bis 17,
**dadurch gekennzeichnet, daß** der Stromanschluß (23) nahe dem Ende eines Leitkabels (5) angeordnet ist.

19. Anlage nach einem oder mehreren der vorhergehenden Ansprüche,
**dadurch gekennzeichnet, daß** die Anlage mit einem Kuhidentifikationssystem zusammenwirkt.

20. Anlage nach einem oder mehreren der vorhergehenden Ansprüche,
**dadurch gekennzeichnet, daß** die Futtermenge von der jeweiligen Kuh abhängt.

21. Anlage nach einem der Ansprüche 7 bis 20,
**dadurch gekennzeichnet, daß** der Roboter (6) geeignet ist, zwei oder mehrere Arten von Futter automatisch zu mischen.

22. Anlage nach einem der Ansprüche 7 bis 21,
**dadurch gekennzeichnet, daß** der Roboter (6) auf einem Gabelstapler (9) basiert.

23. Anlage nach einem der Ansprüche 7 bis 22,
**dadurch gekennzeichnet, daß** der Roboter (6) Bauelemente für den Gabelstapler (9) umfaßt, die seine automatische Steuerung ermöglichen.

24. Anlage nach einem der Ansprüche 7 bis 23,
**dadurch gekennzeichnet, daß** der Roboter (6) ein Fütterungsroboter zum Laden und Entladen von Futter ist.

25. Anlage nach einem der Ansprüche 22 bis 24,
**dadurch gekennzeichnet, daß** der Aufnahmebehälter (11) derart angeordnet ist, daß er an dem Träger (10) des Gabelstaplers (9) hydraulisch verstellbar ist.

26. Anlage nach einem oder mehreren der vorhergehenden Ansprüche,
**dadurch gekennzeichnet, daß** die Misch- und Entladevorrichtung (13) eine Förderschnecke (13) ist, von der Futter wahlweise nach rechts oder links in Abhängigkeit von der Bewegungsrichtung abzuladen ist.

27. Anlage nach einem der Ansprüche 22 bis 26,
**dadurch gekennzeichnet, daß** der an dem Gabelstapler (9) vorhandene Träger (10) den Aufnahmebehälter (11) abstützt.

28. Anlage nach einem der Ansprüche 7 bis 27,
**dadurch gekennzeichnet, daß** die Anlage ein Kontaktelement (22, 23) zum Anschließen des Roboters an das Stromversorgungsnetz umfaßt.

29. Anlage nach einem der Ansprüche 6 bis 28,
**dadurch gekennzeichnet, daß** die Unterkunft (1) einen Melkroboter (37) umfaßt.

## Revendications

1. Structure permettant de déplacer automatiquement, dans un hébergement destiné aux animaux, de la nourriture vers lesdits animaux au moyen d'un accessoire mobile, lequel accessoire inclut un moyen de commande à fonctionnement automatique et au moins un moteur et un récipient de stockage (11) pour la nourriture, **caractérisée en ce que** le récipient de stockage (11) comprend un élément de charge susceptible d'être piloté à l'aide d'une commande automatique et permettant de charger la nourriture à partir d'au moins un silo dans le récipient de stockage (11), l'élément de charge comprenant un dispositif de coupe (12) et une vrille de mélange et de décharge (13) disposée à l'intérieur du récipient de stockage (11).

2. Structure selon la revendication 1, **caractérisée en ce que** la vrille de mélange et de décharge (13) est également appropriée pour décharger la nourriture chargée.

3. Structure selon l'une quelconque des revendications 1 et 2, **caractérisée en ce que** la structure comprend en outre un moyen d'identification de vache permettant d'identifier une vache, ce qui permet d'administrer une quantité et un type spécifiques de nourriture en fonction de la vache concernée.

4. Structure selon l'une ou plusieurs des revendications précédentes, **caractérisée en ce que** l'accessoire est équipé de manière à déplacer automatiquement du fourrage ensilé pour une vache ou pour au moins un petit nombre de vaches.

5. Structure selon l'une ou plusieurs des revendications précédentes, **caractérisée en ce que** l'accessoire est approprié pour décharger automatiquement la matière de façon optionnelle sur sa gauche ou sur sa droite par rapport à la direction de conduite.

6. Structure selon l'une ou plusieurs des revendications précédentes, **caractérisée en ce que** l'hébergement destiné aux animaux est une étable à stabulation libre.

7. Structure selon l'une ou plusieurs des revendications précédentes, **caractérisée en ce que** l'accessoire est un robot (6) conçu pour être déplacé automatiquement.

8. Structure selon l'une quelconque des revendications 6 à 7, **caractérisée en ce que** la structure comprend un moyen de guidage (5) s'étendant à la fois à l'intérieur et à l'extérieur de l'hébergement (1).

9. Structure selon l'une quelconque des revendications 6 à 8, **caractérisée en ce que** l'hébergement est constitué d'une étable et **en ce qu'**un moyen de guidage (5) est fourni au centre de celle-ci.

10. Structure selon l'une quelconque des revendications 8 à 9, **caractérisée en ce que** le moyen de guidage (5) est fixé dans un plancher.

11. Structure selon l'une quelconque des revendications 8 à 10, **caractérisée en ce que** le moyen de guidage (5) s'étend dans le plancher d'un silo de matières non digestibles (3).

12. Structure selon la revendication 11, **caractérisée en ce que** le silo (3) est un silo à rainures.

13. Structure selon l'une quelconque des revendications 7 à 12, **caractérisée en ce que** le robot (6) est entraîné par des batteries.

14. Structure selon l'une quelconque des revendications 8 à 13, **caractérisée en ce que** le moyen de guidage (5) fixé dans le sol est utile pour commander le robot (6).

15. Structure selon l'une quelconque des revendications 7 à 14, **caractérisée en ce que** le robot (6) est conçu pour être déplacé automatiquement jusqu'à une connexion (23) à une alimentation électrique (24) permettant de recharger les batteries.

16. Structure selon la revendication 15, **caractérisée en ce que** l'alimentation électrique (24) est constituée par le réseau électrique.

17. Structure selon l'une quelconque des revendications 13 à 16, **caractérisée en ce que** le robot (6) est automatiquement déconnecté une fois que les batteries ont été rechargées.

18. Structure selon l'une quelconque des revendications 15 à 17, **caractérisée en ce que** la connexion électrique (23) est disposée à proximité de l'extrémité d'un câble de guidage (5).

19. Structure selon l'une ou plusieurs des revendications précédentes, **caractérisée en ce que** la structure coopère avec un système d'identification de vache.

20. Structure selon l'une ou plusieurs des revendications précédentes, **caractérisée en ce que** le volume de l'alimentation dépend de la vache concernée.

21. Structure selon l'une quelconque des revendications 7 à 20, **caractérisée en ce que** le robot (6) est conçu pour mélanger automatiquement deux types de nourriture ou plus.

22. Structure selon l'une quelconque des revendications 7 à 21, **caractérisée en ce que** le robot (6) est basé sur un chariot élévateur à fourche (9).

23. Structure selon l'une quelconque des revendications 7 à 22, **caractérisée en ce que** le robot (6) comprend des éléments de structure pour le chariot élévateur à fourche (9), permettant sa commande automatique.

24. Structure selon l'une quelconque des revendications 7 à 23, **caractérisée en ce que** le robot (6) est un robot d'alimentation permettant de charger et de décharger de la nourriture.

25. Structure selon l'une quelconque des revendications 22 à 24, **caractérisée en ce que** le récipient de stockage (11) est monté de façon réglable hydrauliquement sur le levier (10) du chariot élévateur à fourche (9).

26. Structure selon l'une ou plusieurs des revendications précédentes, **caractérisée en ce que** la vrille de mélange et de décharge (13) est un transporteur à vis sans fin (13) conçu pour décharger la nourriture de façon optionnelle sur la gauche ou sur la droite par rapport à la direction de conduite.

27. Structure selon l'une quelconque des revendications 22 à 26, **caractérisée en ce que** le levier (10) disposé sur le chariot élévateur à fourche (9) supporte le récipient de stockage (11).

28. Structure selon l'une quelconque des revendications 7 à 27, **caractérisée en ce que** la structure comprend un élément de contact (22, 23) permettant de connecter le robot au réseau électrique.

29. Structure selon l'une quelconque des revendications 6 à 28, **caractérisée en ce que** l'hébergement (1) comprend un robot de traite (37).
